(19) Europäisches Patentamt
European Patent Office
Office européen des brevets

(11) **EP 2 489 895 A1**

(12) **EUROPÄISCHE PATENTANMELDUNG**

(43) Veröffentlichungstag:
**22.08.2012 Patentblatt 2012/34**

(51) Int Cl.:
***F16D 3/22*** *(2006.01)*

(21) Anmeldenummer: **12000967.5**

(22) Anmeldetag: **15.02.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **18.02.2011 DE 102011004430
23.05.2011 DE 102011076286**

(71) Anmelder: **Neapco Europe GmbH
52351 Düren (DE)**

(72) Erfinder:
• **Weissenfels, Mirko
51371 Leverkusen (DE)**
• **Bilz, Peter
63579 Freigericht (DE)**

(74) Vertreter: **Lohmanns, Bernard
Bauer Vorberg Kayser
Patentanwälte
Goltsteinstrasse 87
50968 Köln (DE)**

(54) **Kugelgleichlauffestgelenk mit parabelförmigen Kugelbahnverläufen**

(57) Die Erfindung betrifft ein Kugelgleichlauffestgelenk, mit einem hohlen Außenteil (4), in dessen Innenfläche Bahnen (5) angeordnet sind, die sich in Axialrichtung des Außenteils erstrecken, und eine in dem Außenteil (4) angeordnete Kugelnabe (1), in deren Außenfläche zu den Bahnen (5) des Außenteils (4) bezüglich deren Anordnung korrespondierende Bahnen (6) angeordnet sind, die sich in Axialrichtung der Kugelnabe (1) erstrekken, mehreren Kugeln (3), welche jeweils in einer Bahn (5) des Außenteils (4) und einer Bahn (6) der Kugelnabe (1) zur Drehmomentübertragung aufgenommen sind, einem in dem Raum zwischen dem Außenteil (4) und der Kugelnabe (1) angeordneten Käfig (2) mit Kugelfenstern, um die Kugeln (3), beispielsweise in einer gemeinsamen Kugelebene, zu halten, wobei die Bahnen (5, 6) jeweils so ausgestaltet sind, dass sich ein parabelförmiger Bewegungsverlauf des Mittelpunkts einer jeweils auf der Bahn (5, 6) in Axialrichtung abrollenden Kugel (3) ergibt, der durch eine Parabelgleichung definiert ist.

Schnitt A

Fig. 2

**Beschreibung**

Die Erfindung betrifft allgemein ein Kugelgleichlauffestgelenk. Diese Gelenke werden beispielsweise für Antriebswellen oder Lenkwellen verwendet. Gelenke dieser Gattung weisen eine Kugelnabe, mehrere Kugeln, einen die Kugeln in sogenannten zugehörigen Käfigfenstern haltenden Käfig und ein Außenteil auf. Kugelnabe und das Außenteil weisen korrespondierende Kugelbahnen oder Kugelrinnen auf. Die Kugeln bewegen sich in radialer und tangentialer Richtung im Käfigfenster und in den Kugelbahnen. Kugelnabe, Kugelkäfig und Außenteil werden in der Regel durch sphärische, in wechselseitigem Eingriff stehende Flächen geführt. Bei den bekannten Gelenken bilden die Rinnen sphärische Flächen aus, auf denen die Kugeln Abrollbewegungen, die durch kreisförmige Bahnen beschrieben werden können, ausführen. Die als Rinnen im betreffenden Teil ausgebildeten Kugelbahnen befinden sich sowohl in der Kugelnabe als auch im Außenteil und ermöglichen einen teilkreisbahnförmigen Bewegungsablauf, auf der sich die Kugel beim Abwinkeln des Gelenks, d.h. bei nicht fluchtender Ausrichtung von Drehachse des Außenteils und der Kugelnabe, bewegen kann, um dem Gelenk die Abwinklung zu ermöglichen. Bei den bekannten Gelenken behält somit die Kugel ihren Abstand zum Gelenkmittelpunkt bei, dies ist insoweit nachteilig, da somit beim Abwinkeln des Gelenks die Drehmomentübertragung gegenüber dem gestreckten Gelenk beeinträchtigt ist und er Verschleiß erhöht ist.

Vor diesem Hintergrund dieser Nachteile hat sich die vorliegende Erfindung die Aufgabe gestellt, eine Kugelgleichlauffestgelenk bereitzustellen, bei dem gegenüber dem Stand der Technik die Drehmomentübertragung und/oder die Verschleißfestigkeit insbesondere im angewinkelten Zustand, d.h. in dem Zustand, bei dem die beiden Rotationsachsen des Außenkörpers und der Kugelnabe zueinander gewinkelt stehen, verbessert sind. Diese Aufgabe wird erfindungsgemäß durch ein Modul mit den Merkmalen nach Anspruch 1 gelöst. Weitere, besonders vorteilhafte Ausgestaltungen der Erfindung offenbaren die Unteransprüche. Es ist darauf hinzuweisen, dass die in den Patentansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zu- sätzlich.

Das erfindungsgemäße Kugelgleichlauffestge- lenk umfasst ein hohles Außenteil, in dessen Innenfläche Bahnen (Innenbahnen) angeordnet sind, die sich in Axialrichtung des Außenteils erstrecken, und eine in dem Außenteil angeordnete Kugelnabe, in deren Außenfläche zu den Bahnen des Außenteils bezüglich deren An- ordnung korrespondierende Bahnen (Außenbahnen) an- geordnet sind, die sich in Axialrichtung der Kugelnabe erstrecken, mehrere Kugeln, welche jeweils in einer Bahn des Außenteils und einer Bahn der Kugelnabe zur Drehmomentübertragung aufgenommen sind, einem in dem Raum zwischen dem Außenteil und der Kugelnabe angeordneten Käfig mit Kugelfenstern, um die Kugeln, beispielsweise in einer gemeinsamen Kugelebene, zu halten, wobei die Bahnen, d.h. die des Außenteils und die der Kugelnabe jeweils so ausgestaltet sind, dass sich ein parabelförmiger Bewegungsverlauf des Mittelpunkts einer jeweils auf der Bahn abrollenden Kugel ergibt, der durch eine Parabelgleichung definiert ist. Durch die Parabelformgebung behält die jeweilige Kugel beim Abwinkeln des Gelenks den Abstand zum Gelenkmittelpunkt nicht bei, sondern durch die Variation dieses Abstands und damit die Lageänderung der Kugel bezüglich des Gelenkmittelpunkts beim Abwinkeln des Gelenks kann das Gelenk hinsictlich maximaler Drehmomentübertra- gung durch das Gelenk und hinsichtlich Verschleiß optimiert werden. Ferner kann das Anschmiegen der Kugel an die Bahnen verbessert werden.

Erfindungsgemäß muss nicht zwingend die Oberfläche der jeweiligen Bahn in Axialrichtung durch eine Parabel oder dieselbe Parabelgleichung beschrieben sein, sondern es kommt erfindungsgemäß lediglich darauf an, dass die Bahn eines Mittelpunkts einer frei auf der jeweiligen Bahn abrollenden Kugel durch eine Para- belgleichung beschrieben werden kann. Erfindungsge- mäß umfasst soll sein, dass der eigentliche Bahnverlauf nicht durch dieselbe Parabelgleichung beschrieben wird, sondern sich die parabelförmige Bewegung des Mittelpunkts lediglich durch den Verlauf des oder der Berührpunkte zwischen Bahn und Kugel beim Ablaufen der Kugel auf der Bahn ergibt. So kann die Kugel in Abhängigkeit von der Bahngeometrie jeweils einen Berührpunkt beziehungsweise genauer eine Herzsche Berührfläche mit der Bahn ausbilden oder zwei dieser Punkte bzw. Flächen ausbilden. Bevorzugt wird auch der Berührpunktverlauf zwischen Kugel und Bahn in Axialrichtung durch eine Parabelgleichung beschreiben.

Bevorzugt weisen die Bahnen senkrecht zur jeweiligen Axialrichtung der Kugelnabe oder des Außenteils einen elliptischen, parabelförmigen oder gotischen Querschnittsverlauf auf. Um ein besonders hohes Drehmoment übertragen zu können, weisen die Bahnen besonders bevorzugt einen gotischen Querschnittsverlauf auf.

Bevorzugt sind der parabelförmige Bewegungsverlauf der Bahn des Außenteils und der parabelförmige Bewegungsverlauf der Bahn der Kugelnabe bei nicht angewinkeltem Gelenk, also im gestreckten Zustand, nicht deckungsgleich. Dies wird beispielsweise genutzt, um Spiel oder auch gelenkstellungsabhängig variierendes Spiel in die Gelenkverbindung einzubringen. Gemäß einer weiteren Ausgestaltung wird diese nicht deckungsgleiche Auslegung dazu genutzt, der Kugel jeweils eine gelenkstellungsabhängige Anordnung bezüglich des Gelenkmittelpunktes aufzuzwingen.

In einer einfachen Ausgestaltung sind die sich aus den jeweiligen Parabelgleichungen insbesondere aus deren Scheitelform ergebenden Scheitelpunkte für die Bahnen der Kugelnabe zu denen der Bahnen des Außenteils wenigstens in Axialrichtung bei nicht angewinkeltem Gelenk versetzt sind und die Parabelöffnungen einander zugewandt.

Gemäß einer weiteren vorteilhaften Ausgestaltung ist die Symmetrieachse der der Kugelnabe zugehörigen Parabel zu der Symmetrieachse der dem Außenteil zugehörigen Parabel bei nicht abgewinkeltem Gelenk parallel.

Bevorzugt schneidet die Symmetrieachse der der Kugelnabe zugehörigen Parabel die Symmetrieachse der dem Außenteil zugehörigen Parabel bei nicht abgewinkeltem Gelenk, d.h. die Symmetrieachsen sind geneigt zueinander.

In einer einfachen Ausgestaltung liegt der Scheitelpunkt der der Kugelnabe zugehörigen Parabel auf der Achse der Kugelnabe liegt und/oder der Scheitelpunkt der dem Außenteil zugehörigen Parabel liegt auf der Achse des Außenteils. Gemäß einer alternativen Ausgestaltung ist wenigstens ein Scheitelpunkt beabstandet zur betreffenden Achse angeordnet.

Gemäß einer weiteren Ausgestaltung wobei das Außenteil und die Kugelbahnen jeweils erste und zweite, in Umfangsrichtung alternierend angeordnete Bahnen aufweisen, wobei deren durch die zugehörige Parabelgleichung beschriebenen Scheitelpunkte wenigstens in Axialrichtung versetzt sind. Dabei wird ein Gegenbahngelenk realisiert, das geeignet ist, hohe Drehmomente zu übertragen und gleichzeitig in der Lage ist, hohe Axialkräfte aufzunehmen.

Weitere Merkmale und Vorteile der Erfindung ergeben sich aus den übrigen Ansprüchen sowie der folgenden Beschreibung von nicht einschränkend zu verstehenden Ausführungsbeispielen der Erfindung, die im Folgenden unter Bezugnahme auf die Zeichnungen näher erläutert werden. In diesen Zeichnungen zeigen schematisch:

Fig. 1 eine Draufsicht senkrecht zur Axialrichtung einer Ausführungsform des erfindungsgemäßen Gelenks in nicht angewinkeltem Zustand;

Fig. 2 eine Schnittansicht gemäß der Schnittlinie A aus Fig. 1 und entlang der Axialrichtung der Ausführungsform aus Fig. 1;

Fig. 3 eine schematische auf die Parabelverläufe reduzierte Vergrößerung des kreisförmigen Ausschnitts A aus Fig. 2 zur Verdeutlichung der Parabelverläufe;

Fig. 4 eine Draufsicht senkrecht zur Axialrichtung der Ausführungsform des erfindungsgemäßen Gelenks aus Fig. 1 in angewinkeltem Zustand;

Fig. 5 eine Schnittansicht gemäß der Schnittlinie B aus Fig. 4 und entlang der Axialrichtung der Ausführungsform aus Fig. 4;

Fig. 6 eine schematische auf die Parabelverläufe reduzierte Vergrößerung des kreisförmigen Ausschnitts B aus Fig. 5 zur Verdeutlichung der Parabelverläufe;

Fig. 7 eine Draufsicht entlang der Axialrichtung einer weiteren, als Gegenbahngelenk bezeichneten Ausführungsform, wobei sich das Gelenk in nicht angewinkeltem Zustand befindet;

Fig. 8 eine Schnittansicht gemäß der Schnittlinie C aus Fig. 7 und entlang der Axialrichtung der Ausführungsform aus Fig. 7;

Fig. 9 eine schematische auf die Parabelverläufe reduzierte Vergrößerung des ellipsenförmigen Ausschnitts C aus Fig. 8 zur Verdeutlichung der Parabelverläufe;

Fig. 10 eine schematische auf die Parabelverläufe reduzierte Vergrößerung des ellipsenförmigen Ausschnitts D aus Fig. 8 zur Verdeutlichung der Parabelverläufe;

Fig. 11 eine Draufsicht senkrecht zur Axialrichtung der Ausführungsform des erfindungsgemäßen Gelenks aus Fig. 7 in angewinkeltem Zustand;

Fig. 12 eine Schnittansicht gemäß der Schnittlinie D aus Fig.11 und entlang der Axialrichtung der Ausführungsform aus Fig. 11;

Fig. 13 eine schematische auf die Parabelverläufe reduzierte Vergrößerung des ellipsenförmigen Ausschnitts E aus Fig. 12 zur Verdeutlichung der Parabelverläufe;

Fig. 14 eine schematische auf die Parabelverläufe reduzierte Vergrößerung des ellipsenförmigen Ausschnitts F aus Fig. 12 zur Verdeutlichung der Parabelverläufe;

Fig. 15 zeigt einen Vergleich von parabelförmigen Bahnverläufen zu nicht erfindungsgemäßen kugelförmigen Bahnverläufen bei nicht angewinkeltem Gelenk;

Fig. 16 zeigt einen Vergleich von parabelförmigen Bahnverläufen zu nicht erfindungsgemäßen kugelförmigen Bahnverläufen bei angewinkeltem Gelenk;

Fig. 17 ist eine Detailansicht aus Fig. 16.

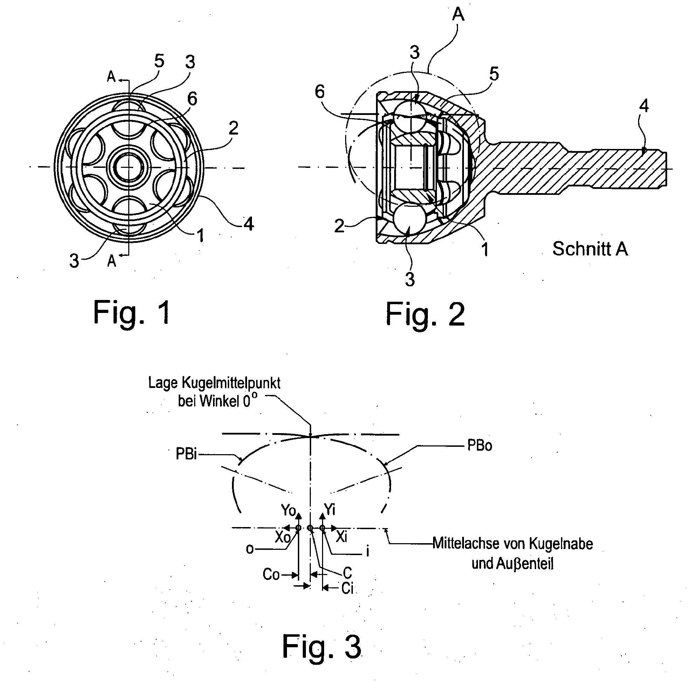

Wie die Figur 2 zeigt, umfasst das erfindungsgemäße Gelenk ein Außenteil 4 und eine in diesem hohlen Außenteil 4 aufgenommene Kugelnabe 1. Die beiden stehen über 6, 8 oder 12 Kugeln 3 in einem Wirkeingriff, wobei die Kugeln 3 in einem Kugelkäfig 2 geführt sind. Bei dem erfindungsgemäßen Gelenk sind so in der Längsrichtung des Außenteils 4 und der Kugelnabe 1 Bahnen 5 bzw. 6 ausgeprägt, dass der Mittelpunkt einer auf der jeweiligen Bahn 5, 6 abrollenden Kugel jeweils eine Parabel, PBo für das Außenteil, PBi für die Kugelnabe, beschreibt. Beispielsweise weist der in der Axialrichtung der Kugelnabe 1 bzw. des Außenteils 4 zumindest der den Bewegungsablauf der Kugel bestimmende Abschnitt der Bahn 5, 6 einen parabelförmigen Querschnittsverlauf in Axialrichtung auf. "parabelförmig" meint einen Abschnitt einer durch eine Parabelgleichung beschreibbaren Parabel. Die der Kugelmittelpunktsbewegung entsprechenden, parabelförmigen Bahnen PBo und PBi haben ihren Konstruktionsursprung um die Maße Ci und Co vom Gelenksmittelpunkt C entfernt und befindet sich somit auf den Punkten i und o, bevorzugt auf der Gelenkmittelachse bei nicht angewinkeltem Gelenk. Im Punkt i hat das Koordinatensystem Xi,Yi für die parabelförmigen Bahn PBi der Kugelnabe 1 seinen Ursprung. Die Achse von Xi liegt auf der Rotationsachse der Kugelnabe 1. Im Koordinatensystem Xi,Yi wird eine Parabel (PBi) konstruiert, die den Bahnverlauf der Kugelmitte an der Kugelnabe 1 entspricht. Von der parabelförmigen Kugelmittelpunktspahn PBi ist dann der Bahnquerschnitt in der zur Axialrichtung senkrechten Richtung gotisch, elliptisch oder kugelförmig ausgeprägt. Im Punkt o hat das Koordinatensystem Xo, Yo für die parabelförmige Bahn PBo des Außenteils 4 seinen Ursprung. Die Achse von Xo liegt auf der Rotationsachse des Außenteils 4. Im Koordinatensystem Xo,Yo wird eine Parabel. (PBo) konstruiert, die dem Bahnverlauf der Kugelmitte beim Abrollen der Kugel 3 auf der Bahn 5 des Außenteils 4 entspricht. Von der parabelförmigen, den Bewegungsablauf der Kugelmitte beschreibenden Bahn des Außenteils 4 ist dann der Bahnquerschnitt in der zur Axialrichtung senkrechten Richtung beispielsweise gotisch, elliptisch oder kugelförmig ausgeprägt.

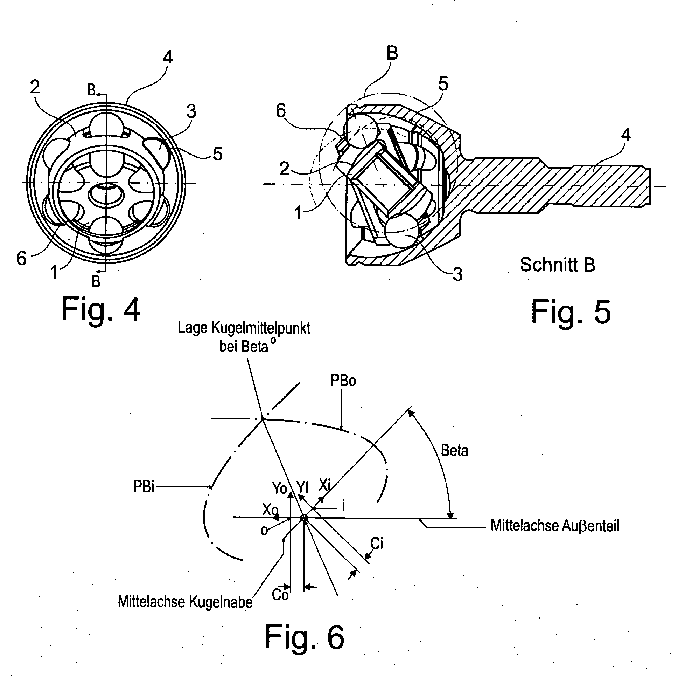

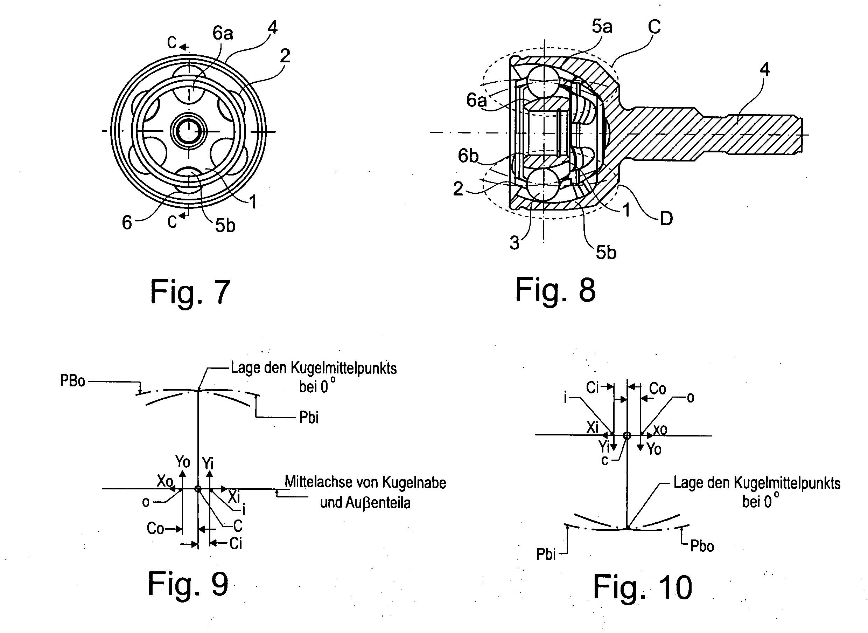

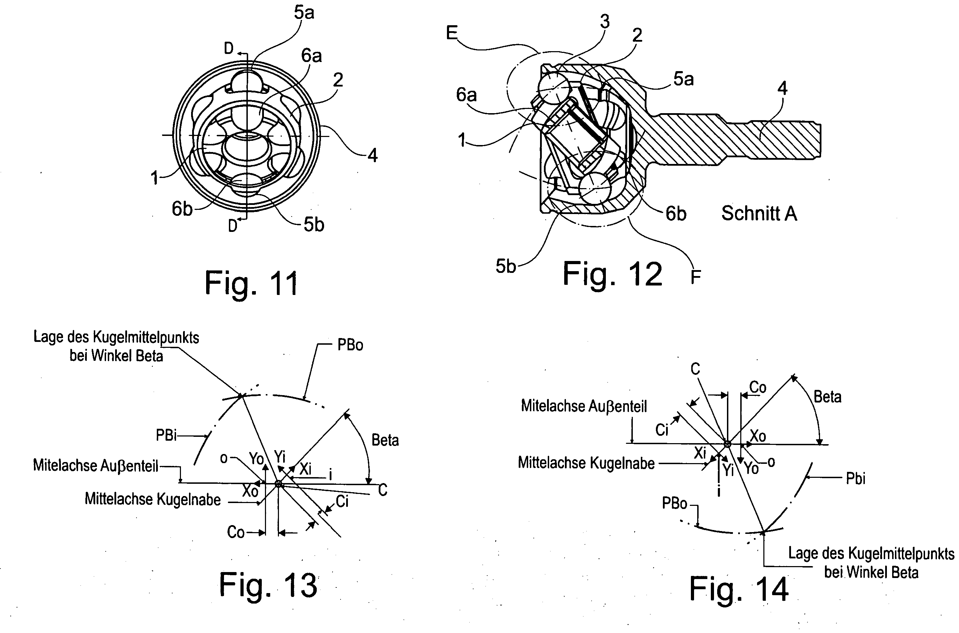

Figur 1 zeigt die Draufsicht eines erfindungsgemäßen Kugelgleichlauffestgelenk in gestrecktem Zustand (Abwinklung 0°) mit parabelförmigem Bewegungsverlauf einer auf den Bahnen 5, 6 der Kugelnabe 1 bzw. des Außenteils 4 ablaufenden Kugel 3. Der dazugehörige Schnitt entlang der Axialrichtung gemäß der Schnittlinie A aus Figur 1 ist in Figur 2 gezeigt. Die Konstruktionsmittelpunkte der parabelförmigen Bewegungsverläufe befindet sich beim Außenteil 4 für alle Bahnen 5 auf der gleichen Seite (Punkt o). Die Konstruktionsmittelpunkte der parabelförmigen Bewegungsverläufe der Bahnen 6 der Kugelnabe 1 befinden sich ebenfalls immer auf der gleiche Seite (Punkt i). Figur 3 verdeutlicht die Lage der Koordinatensysteme Xo,Yo und Xi,Yi. Figur 4 zeigt die Draufsicht und Figur 5 den Schnitt in Axialrichtung entsprechend Schnittlinie B aus Fig. 4 des Kugelgleichlauffestgelenks mit parabelförmigem Bewegungsverlauf des Kugelmittelpunkts aus Figur 1 und 2, mit dem Unterschied, dass das Gelenk um den Winkel Beta° abgewinkelt ist. Figur 6 verdeutlicht die Lage der Koordinatensystems Xo,Yo und Xi,Yi unter Abwinklung. Figur 7 zeigt die Draufsicht einer weiteren Ausführungsform des erfindungsgemäßen Gelenks, es handelt sich um ein sogenanntes Kugelgegenbahngleichlauffestgelenk, mit ebenfalls parabelförmigen Bewegungsverlauf einer jeweils auf den Bahnen 5a, 6a, bzw. 5b, 6b von Kugelnabe 1 bzw. Außenteil 4 abrollenden Kugel 3, wobei sich das Gelenk in gestrecktem Zustand (Abwinklung 0°) befindet. Bei dieser Ausgestaltung wechselt sich die Position der Konstruktionsmittelpunkte der parabelförmigen Bahnen (o und i) bei jedem Bahnpaar 5a, 6a bzw. 5b, 6b im Uhrzeigersinn ab. In Figur 9 ist jeweils der Konstruktionsmittelpunkt der parabelförmigen Bewegungsverläufe der Kugel 3 aufgrund des Paares erster Bahnen 5a, 6a von Kugelnabe 1 bzw. Außenteil 4 so angeordnet, dass o (Außenteil) links vom Gelenkmittelpunkt C ist und i (Kugelnabe) rechts vom Gelenkmittelpunkt C ist. In Figur 10 ist jeweils der Konstruktionsmittelpunkt der parabelförmigen Bewegungsverläufe der Kugel 3 aufgrund des Paares zweiter Bahnen 5b, 6b von Kugelnabe 1 bzw. Außenteil 4 gewechselt. Der Konstruktionsmittelpunkt i (Kugelnabe) befindet sich nun links vom Gelenkmittelpunkt C und der Konstruktionsmittelpunkt o (Außenteil) befindet sich nun rechts vom Gelenkmittelpunkt C. Figur 11 und 12 zeigen das erfindungsgemäße Gelenk, das in Figur 7, 8, 9 und 10 in gestrecktem Zustand gezeigt ist, im abgewinkelten (Beta °) Zustand. Figur 13 und 14 verdeutlichen die Lage von den Koordinatensystem Xo,Yo und Xi,Yi unter Abwinklung. Die parabelförmigen Bahnen können beim Außenteil wie in Figur 1-14 gezeigt, mit einem angeformten Gelenkboden, oder wie nicht dargestellt ohne Gelenkboden (Scheibe) ausgestaltet sein. Die Anzahl der parabelförmigen Bahnpaare 5, 6 bzw. 5a, 6a kann 6, 8 und 12 betragen.

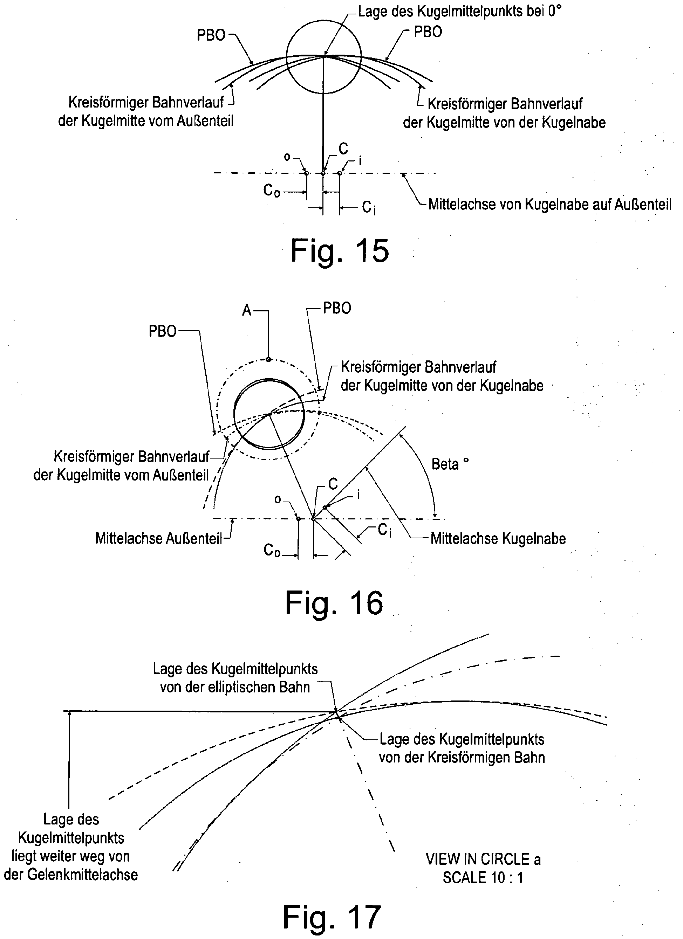

Durch das Verwenden von Bahnen 5, 5a, 5b, 6, 6a, 6b im Außenteil 4 bzw. in der Kugelnabe 1, die einen parabelförmigen Bewegungsverlauf des Kugelmittelpunkts bewirken, kann man die Position der Kugel 3 in der Endlage der Bahn (unter Abwinklung) besser positionieren. Man hat, beispielsweise im Gegensatz zur Bahn mit kugelförmigen Bewegungsverlauf der Kugelmitte, die durch eine Kreisgleichung beschrieben werden kann, die Möglichkeit die Kugeln näher an die Gelenkmittelachse oder weiter weg von der Gelenkmittelachse zu positionieren und kann dadurch die Lebensdauer und die zu übertragende Kraft unter Abwinklung des Gelenkes verbessern. Figur 15 zeigt einen Vergleich von einem kugelförmigen Bahnverlauf (Kreis) der Kugelmitte mit einem parabelförmigen Bahnverlauf der Kugelmitte unter 0° Abwinklung. Die Kugelmitte von beiden Bahnen liegt bei diesem Beispiel auf dem gleichen Punkt. Wenn man das Gelenk (Figur 16 und Figur 17) aber abwinkelt, liegt die Kugel der parabelförmigen Bahn nicht mehr auf den gleichen Punkt wie von der kreisförmigen Bahn. Im Beispiel Figur 16 und 17 liegt der Kugelmittelpunkt der parabelförmigen Bahn weiter von der Gelenkmittelachse entfernt, als der Kugelmittelpunkt der kreisförmigen Bahn. Erfindungsgemäß umfasst ist auch eine nicht dargestellte Ausführungsform, bei der die parabelförmigen Bewegungsverläufe so konstruiert sind, dass der Kugelmittelpunkt näher an der Gelenkmittelachse liegt, als der Kugelmittelpunkt einer kreisförmigen Bahn.

**Parabelgleichungen:**

PBo:

$$Yo = ao * Xo^2 + bo * Xo + co$$

PBi:

$$Yi = ai * Xi^2 + bi * Xi + ci$$

**Bezugszeichenliste:**

C => Gelenkmittelpunkt

o => Konstruktionsmittelpunkt der parabelförmigen Bahn vom Außenteil

i => Konstruktionsmittelpunkt der parabelförmigen Bahn der Kugelnabe

Co => Abstand Gelenkmittelpunkt C zu Konstruktionsmittelpunkt o

Ci => Abstand Gelenkmittelpunkt C zu Konstruktionsmittelpunkt i

PBo => Parabelförmiger Bahnverlauf der Kugelmitte vom Außenteil

PBi => Parabelförmiger Bahnverlauf der Kugelmitte von der Kugelnabe

ao => Koeffizient um die Form der Parabel vom Außenteil zu ändern

ai => Koeffizient um die Form der Parabel von der Kugelnabe zu ändern

bo => Koeffizient um die Form der Parabel vom Außenteil zu ändern

bi => Koeffizient um die Form der Parabel von der Kugelnabe zu ändern

co => Koeffizient um die Form der Parabel vom Außenteil zu ändern

ci Koeffizient um die Form der Parabel von der Kugelnabe zu ändern

KKS Xo,Yo Koordinatensystem für die Parabel PBo (Außenteil)

KKS Xi,Yi => Koordinatensystem für die Parabel PBi (Kugelnabe)

Beta° => Winkel zwischen Achse Kugelnabe und Achse Außenteil (Abwinklung)

1 Kugelnabe

2 Kugelkäfig

3 Kugel

4 Außenteil

5, 5a, 5b Bahn im Außenteil

6, 6a, 6b Bahn in der Kugelnabe

**Patentansprüche**

1. Kugelgleichlauffestgelenk, mit einem hohlen Außenteil (4), in dessen Innenfläche Bahnen (5) angeordnet sind, die sich in Axialrichtung des Außenteils erstrecken, und eine in dem Außenteil (4) angeordnete Kugelnabe (1), in deren Außenfläche zu den Bahnen (5) des Außenteils (4) bezüglich deren Anordnung korrespondierende Bahnen (6) angeordnet sind, die sich in Axialrichtung der Kugelnabe (1) erstrecken, mehreren Kugeln (3), welche jeweils in einer Bahn (5) des Außenteils (4) und einer Bahn (6) der Kugelnabe (1) zur Drehmomentübertragung aufgenommen sind, einem in dem Raum zwischen dem Außenteil (4) und der Kugelnabe (1) angeordneten Käfig (2) mit Kugelfenstern, um die Kugeln (3), beispielsweise in einer gemeinsamen Kugelebene, zu halten, wobei die Bahnen (5, 6) jeweils so ausgestaltet sind, dass sich ein parabelförmiger Bewegungsverlauf des Mittelpunkts einer jeweils auf der Bahn (5, 6) in Axialrichtung abrollenden Kugel (3) ergibt, der durch eine Parabelgleichung definiert ist.

2. Kugelgleichlauffestgelenk gemäß dem vorhergehenden Anspruch, wobei der parabelförmige Bewegungsverlauf der Bahn (5) des Außenteils (4) und der parabelförmige Bewegungsverlauf der Bahn (6) der Kugelnabe (1) bei nicht angewinkeltem Gelenk nicht dekkungsgleich sind.

3. Kugelgleichlauffestgelenk gemäß einem der vorhergehenden Ansprüche, wobei die sich daraus ergebenden Scheitelpunkte für die Bahnen (6) der Kugelnabe (1) zu denen der Bahnen (5) des Außenteils (4) wenigstens in Axialrichtung bei nicht angewinkeltem Gelenk versetzt sind und die Parabelöffnungen einander zugewandt sind.

4. Kugelgleichlauffestgelenk gemäß einem der vorhergehenden Ansprüche, wobei die Bahnen (5, 6) senkrecht zur jeweiligen Axialrichtung der Kugelnabe (1) oder des Außenteils (4) einen parabelförmigen, elliptischen oder gotischen Querschnittsverlauf, bevorzugt gotischen Querschnittsverlauf, aufweisen.

5. Kugelgleichlauffestgelenk gemäß einem der vorhergehenden Ansprüche, wobei die Symmetrieachse der der Kugelnabe (1) zugehörigen Parabel zu der Symmetrieachse der dem Außenteil (4) zugehörigen Parabel bei nicht abgewinkeltem Gelenk parallel oder geneigt, bevorzugt geneigt, ist.

6. Kugelgleichlauffestgelenk gemäß einem der vorhergehenden Ansprüche, wobei der Scheitelpunkt der der Kugelnabe (1) zugehörigen Parabel auf der Achse der Kugelnabe (1) liegt oder dazu beabstandet ist und/oder der Scheitelpunkt der dem Außenteil (4) zugehörigen Parabel auf der Achse des Außenteils (4) liegt oder dazu beabstandet ist.

7. Kugelgleichlauffestgelenk gemäß einem der vorhergehenden Ansprüche, wobei das Außenteil (4) und die Kugelnabe (1) jeweils erste und zweite, in Umfangsrichtung alternierend angeordnete Bahnen (5a, 5b, 6a, 6b) aufweisen, wobei deren durch die zugehörige Parabelgleichung beschriebenen Scheitelpunkte wenigstens in Axialrichtung versetzt sind.

Fig. 1

Fig. 2

Schnitt A

Lage Kugelmittelpunkt
bei Winkel 0°

PBi

PBo

Yo  Yi

Xo  Xi

o  i

Co  C

Ci

Mittelachse von Kugelnabe
und Außenteil

Fig. 3

EP 2 489 895 A1

**Fig. 4**

**Schnitt B**

**Fig. 5**

Lage Kugelmittelpunkt bei Beta[0]

PBo

PBi

Beta

$Y_o$ $Y_l$ $X_i$

$X_o$

i

o

$C_i$

$C_o$

Mittelachse Außenteil

Mittelachse Kugelnabe

**Fig. 6**

EP 2 489 895 A1

Fig. 7

Fig. 8

Fig. 9

Fig. 10

Fig. 12

Schnitt A

4

5a

2

3

6a

1

E

6b

5b

F

Fig. 11

4

2

5a

6a

5b

6b

1

D

D

Fig. 13

PBo

Beta

C

Ci

i

Xi

Yo

Yi

Xo

o

Co

PBi

Lage des Kugelmittelpunkts
bei Winkel Beta

Mittelachse Außenteil

Mittelachse Kugelnabe

Fig. 14

Beta

Pbi

Co

Xo

Yo

o

Yi

Xi

C

Ci

i

PBo

Lage des Kugelmittelpunkts
bei Winkel Beta

Mitelachse Außenteil

Mittelachse Kugelnabe

10

Lage des Kugelmittelpunkts bei 0°

PBO

PBO

Kreisförmiger Bahnverlauf
der Kugelmitte vom Außenteil

Kreisförmiger Bahnverlauf
der Kugelmitte von der Kugelnabe

$C_o$

$C_i$

Mittelachse von Kugelnabe auf Außenteil

Fig. 15

A

PBO

PBO

Kreisförmiger Bahnverlauf
der Kugelmitte von der Kugelnabe

Kreisförmiger Bahnverlauf
der Kugelmitte vom Außenteil

Beta °

Mittelachse Außenteil

$C_o$

$C_i$

Mittelachse Kugelnabe

Fig. 16

Lage des Kugelmittelpunkts
von der elliptischen Bahn

Lage des Kugelmittelpunkts
von der Kreisförmigen Bahn

Lage des
Kugelmittelpunkts
liegt weiter weg von
der Gelenkmittelachse

VIEW IN CIRCLE a
SCALE 10 : 1

Fig. 17

Europäisches
Patentamt

European
Patent Office

Office européen
des brevets

## EUROPÄISCHER RECHERCHENBERICHT

**Nummer der Anmeldung**

EP 12 00 0967

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 2 799 519 A1 (GUIMBRETIERE PIERRE [FR]) 13. April 2001 (2001-04-13) * Seite 8 - Seite 10; Abbildungen 1A-6A * ----- | 1-7 | INV. F16D3/22 |
| X | DE 10 2004 018721 A1 (GKN DRIVELINE DEUTSCHLAND GMBH [DE]) 21. April 2005 (2005-04-21) * Absatz [0016]; Abbildungen 3b,3c * ----- | 1-7 | |
| X | FR 2 693 521 A1 (GKN AUTOMOTIVE AG [DE]) 14. Januar 1994 (1994-01-14) * Abbildung 5b * ----- | 1-7 | |
| X | GB 2 131 123 A (LOEHR & BROMKAMP GMBH) 13. Juni 1984 (1984-06-13) * Seite 1, Zeile 91 - Zeile 119; Anspruch 3 * ----- | 1,4 | |

RECHERCHIERTE
SACHGEBIETE (IPC)

F16D

Der vorliegende Recherchenbericht wurde für alle Patentansprüche erstellt

| Recherchenort | Abschlußdatum der Recherche | Prüfer |
|---|---|---|
| Den Haag | 3. Juli 2012 | Cerva-Pédrin, Sonia |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**EP 2 489 895 A1**

**ANHANG ZUM EUROPÄISCHEN RECHERCHENBERICHT**
**ÜBER DIE EUROPÄISCHE PATENTANMELDUNG NR.**

EP 12 00 0967

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-07-2012

| Im Recherchenbericht angeführtes Patentdokument | Datum der Veröffentlichung | Mitglied(er) der Patentfamilie | Datum der Veröffentlichung |
|---|---|---|---|
| FR 2799519 A1 | 13-04-2001 | KEINE | |
| DE 102004018721 A1 | 21-04-2005 | CN 1871445 A<br>DE 102004018721 A1 | 29-11-2006<br>21-04-2005 |
| FR 2693521 A1 | 14-01-1994 | DE 4222205 A1<br>ES 2063709 A2<br>FR 2693521 A1<br>JP 6050351 A<br>US 5531643 A | 13-01-1994<br>01-01-1995<br>14-01-1994<br>22-02-1994<br>02-07-1996 |
| GB 2131123 A | 13-06-1984 | BR 8306010 A<br>DE 3244196 A1<br>FR 2536807 A1<br>GB 2131123 A<br>IT 1195445 B<br>JP 1647917 C<br>JP 2060892 B<br>JP 59106724 A<br>US 4698047 A | 10-07-1984<br>30-05-1984<br>01-06-1984<br>13-06-1984<br>19-10-1988<br>13-03-1992<br>18-12-1990<br>20-06-1984<br>06-10-1987 |

EPO FORM P0461

Für nähere Einzelheiten zu diesem Anhang : siehe Amtsblatt des Europäischen Patentamts, Nr.12/82